# EUROPEAN PATENT SPECIFICATION

(11) **EP 2 409 856 B1**
(45) Date of publication and mention of the grant of the patent: **29.07.2015**
(21) Application number: 11163934.0
(22) Date of filing: 05.11.2010
(51) Int. Cl.: B60B 27/00, F16C 33/78, F16J 15/32

(54) **A wheel hub unit for vehicle wheels**
Radnabeneinheit für Fahrzeugräder
Ensemble moyeu pour véhicules automobiles

(30) Priority: 05.11.2009 IT TO20090850
(43) Date of publication of application: 25.01.2012
(62) Divisional of application: 10190090.0
(73) Proprietor: Aktiebolaget SKF, 415 50 Göteborg (SE)
(72) Inventor: Morello, Fausto, I-12048, SOMMARIVA DEL BOSCO (Cuneo) (IT)
(74) Representative: Tedeschini, Luca

(56) References cited:
- EP-A- 0 458 123
- EP-A- 1 277 978
- DE-A1- 10 125 253
- US-A1- 2006 045 400

## Description

The present invention relates to a wheel hub unit for vehicle wheels.

Wheel hub units for vehicle wheels of the known type comprise an outer ring, a flanged inner ring for supporting the wheel, two annular arrangements of rolling-contact bodies situated between the two rings, and a sealing device positioned on the wheel side and comprising, in turn, a supporting shield mounted inside the outer ring, one or more sealing rings fixed to the supporting shield and a further shield, commonly called a "flinger", keyed on the inner ring and positioned in contact with the sealing lips.

In the units described above, the flanged inner ring is provided with a small rolling ring for the annular arrangement on the opposite side to the wheel side and with a shoulder against which the small ring is positioned in axial abutment.

The sealing quality of the sealing device described above is influenced in particular by the correct axial positioning of the flinger during assembly. In fact, the flinger is fitted on a cylindrical surface of the inner ring using the shoulder of the small ring as an axial reference point. However, despite the fact that specific test instruments for measuring the axial position of the flinger have been used during assembly, this position does not always correspond to the desired position. Moreover, since the flinger is free to flex it could undergo deformation of the respective radial part arranged in contact with the said sealing lips. If one - or in the worst of cases - both the abovementioned events should occur, the sealing quality of the sealing device would be subject to deterioration such as to adversely affect even the correct operation of the wheel hub.

The object of the present invention is to provide a wheel hub preamble of claim 1. Other wheel hub units are disclosed in DE 101 25 253 A1 and EP 1 277 978 A1.

The object of the present invention is to provide a wheel hub unit for vehicle wheels, which is able to overcome the drawbacks described above in a simple and low-cost manner.

According to the present invention there is provided a wheel hub unit as defined in claim 1. Preferred embodiments are defined in the dependent claims.

The invention will now be described with reference to the accompanying drawings which show a non-limiting exemplary embodiment thereof, in which:
- Figure 1 shows an axially sectioned view, with parts removed for greater clarity, of a preferred embodiment of the wheel hub unit for vehicle wheels according to the present invention; and
- Figure 2 shows, on a larger scale, a detail of Figure 1.

With reference to the accompanying drawing, numeral 1 designates in its entirety a wheel hub unit for vehicle wheels.

The unit 1 has an axis of rotation A and comprises a rolling bearing 1' in turn comprising an outer ring 2 and an inner ring 3 positioned coaxially and inside the outer ring 2. The unit 1 also comprises a flange 4 which is designed to support a wheel (not shown) and is transverse with respect to the axis A, fixed to the inner ring 3 and is made of the same material as the inner ring 3.

The bearing 1' also comprises a plurality of rolling-contact bodies 5 arranged between the inner ring 3 and the outer ring 2 so as to allow relative rotation of the inner ring 3 and the outer ring 2.

The outer ring 2 comprises a cylindrical edge 21 which faces the flange 4 and is delimited:
- axially, by an annular surface 22 which is transverse with respect to the axis A, and
- radially, by a cylindrical surface 23 which is coaxial with the axis A and transverse and adjacent to the surface 22.

The outer ring 2 also comprises a raceway 24 which is engaged by the rolling-contact bodies 5 and is axially delimited by a relief groove 25 adjacent to the surface 23.

The inner ring 3 comprises a respective raceway 34, facing the raceway 24 and engaged by the rolling-contact bodies 5, and a cylindrical keying surface 31, which is adjacent to the raceway 34 and has a diameter greater than the maximum diameter of the raceway 34.

The inner ring 3 also comprises a shoulder 32 which is axially delimited:
- on the side where the surface 31 is located, by a respective annular surface 33 transverse with respect to the axis A and the surface 31, and
- on the side where the flange 4 is located, by an annular surface 35 having a curved cross section.

The surface 31 and the surface 33 have the same degree of surface finish and are connected together by a radiused connecting portion 36, while the surface 33 and the surface 35 form between them an angular edge or corner 37 which is directed substantially towards the surface 23. The latter surface, i.e. surface 23, is parallel and axially aligned with almost all of the surface 31 and, being radially spaced from the surface 31, forms together with the surface 31 a seat 6.

The seat 6 is delimited radially towards the outside by the surface 23 and radially towards the inside by the surface 31, while it is axially delimited by the surface 33, and is open towards the rolling-contact bodies 5.

The cylindrical edge 21 and the surface 23 extend axially beyond the surface 31 towards the flange 4. The surface 23 is superimposed axially, but not radially, on the surface 35, with which it forms a passage 7 which communicates with the seat 6 and has radial dimensions smaller than the dimensions of the seat 6.

The surface 35 is instead radially delimited towards the axis A by the angular edge 37 and is radially delimited on the opposite side of the angular edge 37 by another angular edge 38 which is formed by the surface 35 and by the flange 4 and subtends an angle wider than the angle subtended by the angular edge 37.

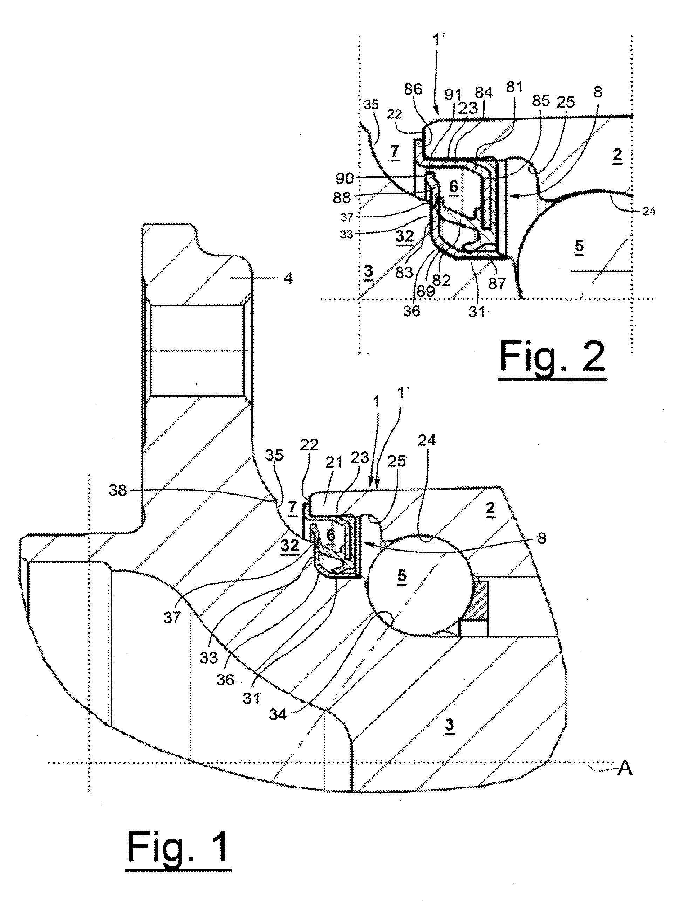

With reference now also to Figure 2, the unit 1 further comprises a sealing device 8. This device is positioned on the so-called "wheel side" and inside the seat 6 so as to prevent the impurities from entering into the bearing 1'. The sealing device 8 comprises a supporting shield 81 which is mounted inside the outer ring 2, one or more sealing lips 82 fixed to the supporting shield 81 and a flinger 83 which is mounted, i.e. keyed, onto the surface 31 of the inner ring 3. The flinger 83 is positioned both in contact with the sealing lips 82 and next to the shoulder 32. The function of shoulder 32 is to provide an axial and well-defined abutment for the position of the flinger 83.

The supporting shield 81 comprises a cylindrical portion 84 mounted on the surface 23 and a flanged portion 85 which is fixed to and transverse with respect to the cylindrical portion 84 and directly supports the lips 82. Finally, the shield 81 comprises a stopping edge 86 which is joined to the portion 84 on the opposite side to the flanged portion 85. The stopping edge 86 is directed radially outwards with respect to the portion 84 and is arranged in axial abutment against the surface 22 so as to define specifically the position of the shield 81 along the axis A, i.e. inside the seat 6.

The flinger 83 comprises a respective cylindrical portion 87 which is mounted, e.g. keyed, onto the surface 31 and a flanged portion 88 which is fixed to and transverse with respect to the cylindrical portion 87 and is positioned in axial abutment against the surface 33 of the shoulder 32. The flinger 83 also comprises a portion 89 connecting together the portion 87 and the flanged portion 88 and an anti-vortex element 90 which is positioned at a free end of the flanged portion 88 and faces the passage 7, defining a labyrinth 91 with the portion 84 of the shield 81. The connecting portion 89 is in the form of an slanting plane, as in the example of embodiment shown in Figure 2, or may have a curved shape or also may have a partially curved and partially flat shape. The radial length of the flanged portion 88 will also depend on the shape of the connecting portion 89 and in any case will always be such as to allow the anti-vortex element 90 to project beyond the angular edge 37 of the shoulder 32. In particular, comparing the radial length of the flanged portion 88 of the flinger 83 with a radial height of the shoulder 32, the radial length of the flanged portion 88 must not be more than one and a half times the radial height of the shoulder 32.

The advantage of the shoulder 32 compared to the embodiments of the wheel hub units similar to the unit 1, but without the shoulder 32, as described in the introduction, consists not only in the precise and definitive definition of the axial position of the flinger 83, with an undoubted increase in reliability of the sealing device 8, but also in a simpler design of the flinger 83, which may have a smaller flange thickness with an undoubted saving in terms of material used without adversely affecting in any way the robustness either of the entire sealing device 8 or of the unit 1.

Moreover, for the purposes of manufacturing the unit 1, the presence of the shoulder 32 will allow even more precise and reliable machining of the inner ring 3 since this inner ring 3 may be gripped on an axial level closer to the flange 4.

Furthermore, the ratio between the radial height of the shoulder 32 and the radial length of the flanged portion 88 of the flinger 83, as described above and as however may be differently calculated depending on the constructional requirements of the unit 1, will ensure in any case that the flinger 83 is not in any way deformed during contact thereof against the shoulder 32.

Finally, compared to the embodiments of the wheel hub units similar to the unit 1, but without the shoulder 32, the presence of the latter will reduce substantially the risks of through-hardening in particular in the case of small-size units 1. In fact, at least all of the zone of the bearing 1' defined by the surfaces 35, 33, 31 and 34 is normally subject to a hardening treatment in order to provide the same surfaces with hardness and wear-resistance characteristics which are typical of bearings. The shoulder 32 increases the thickness of the inner ring 3 precisely at those points where most frequently through-hardening may occur.

It is understood that the invention is not limited to the embodiments, which are described and illustrated here and are to be regarded as examples of implementing the wheel hub unit for vehicle wheels, and that it may instead undergo further modifications as regards the shapes and arrangements of parts, constructional and assembly details.

## Claims

1. A wheel hub unit (1) for vehicle wheels, the unit (1) having an axis of rotation (A) and comprising:
- a flanged inner ring (3) with a flange (4) for supporting a wheel,
- an outer ring (2) comprising a cylindrical edge (21) which faces the flange (4) and provides a cylindrical surface (23) which is coaxial with the axis (A),
- rolling bodies (5) arranged between the inner ring (3) and the outer ring (2),
- a sealing device (8) positioned on the wheel side and comprising, in turn, one or more sealing lips (82) and a flinger (83) which is mounted on a keying surface (31) of the inner ring (3) and is positioned in contact with the sealing lips (82), the flinger (83) comprising a respective cylindrical portion (87) which is keyed onto the keying surface (31) and a flanged portion (88) which is fixed to and transverse with respect to the cylindrical portion (87);
- a first axial abutting shoulder (32) which is formed along the keying surface (31) on which the flinger (83) is keyed and which is positioned in contact with the flinger, wherein the sealing device (8) is positioned inside a seat (6) which is delimited
- radially outwardly, by the cylindrical surface (23) of the cylindrical edge (21),
- radially inwardly, by the keying surface (31),
- axially outwardly, by an annular surface (33) which is transverse to the axis (A) and is formed by the shoulder (32), the seat (6) being open towards the rolling contact bodies (5),
wherein the cylindrical surface (23) of the cylindrical edge (21) extends axially beyond the keying surface (31) towards the flange (4);
**characterized in that** the flanged portion (88) of the flinger (83) is positioned in contact with the annular surface (33) of the first abutting shoulder (32), that the flanged portion (88) has a radial length of not more than one and a half times the radial height of the first abutting shoulder (32), and that the first abutting shoulder (32) is axially delimited:
on the side where the keying surface (31) is located, by the annular surface (33) and
on the side where the flange (4) is located, by an annular surface (35) having a curved cross section, the annular surface (33) and the curved annular surface (35) forming an angled edge (37) between them.

2. A wheel hub unit according to Claim 1, **characterized in that** the flanged portion (88) projects beyond the angled edge (37) and terminates in an anti-vortex element (90) forming a labyrinth (91) with at least the outer ring (2).

3. A wheel hub unit according to Claim 1 or 2, **characterized in that** the transverse annular surface (33) of the shoulder (32) has a degree of surface finish similar to a degree of surface finish of the keying surface (31).

## Patentansprüche

1. Radnabeneinheit (1) für Fahrzeugräder, wobei die Einheit (1) eine Drehachse (A) aufweist und umfasst:
einen geflanschten Innenring (3) mit einem Flansch (4) zum Abstützen eines Rades,
einen Außenring (2), umfassend einen zylindrischen Rand (21), der dem Flansch (4) zugewandt ist und eine zylindrische Oberfläche (23) bereitstellt, die koaxial mit der Achse (A) verläuft,
Rollkörper (5), die zwischen dem Innenring (3) und dem Außenring (2) angeordnet sind,
eine Abdichtungsvorrichtung (8), die auf der Radseite positioniert ist und wiederum eine oder mehrere Abdichtungslippen (82) und einen Schleuderring (83) umfasst, der auf einer Keilfläche (31) des Innenrings (3) montiert ist und in Kontakt mit den Abdichtungslippen (82) angeordnet ist, wobei der Schleuderring (83) einen zugehörigen zylindrischen Abschnitt (87), der mit der Keilfläche (31) verkeilt ist, und einen Flanschabschnitt (88) aufweist, der an dem und quer in Bezug auf den zylindrischen Abschnitt (87) befestigt ist;
eine erste axiale angrenzende Schulter (32), die entlang der Keilfläche (31) ausgebildet ist, mit welcher der Schleuderring (83) verkeilt ist und die in Kontakt mit dem Schleuderring angeordnet ist, wobei die Abdichtungsvorrichtung (8) in einem Sitz (6) angeordnet ist, der wie folgt begrenzt ist:
- radial nach außen durch die zylindrische Oberfläche (23) des zylindrischen Randes (21),
- radial nach innen durch die Keilfläche (31),
- axial nach außen durch eine ringförmige Oberfläche (33), die quer zur Achse (A) verläuft und von der Schulter (32) ausgebildet wird, wobei der Sitz (6) in Richtung der Rollkontaktkörper (5) geöffnet ist,
wobei sich die zylindrische Oberfläche (23) des zylindrischen Randes (21) axial über die Keilfläche (31) hinaus zum Flansch (4) erstreckt;
**dadurch gekennzeichnet, dass** der Flanschabschnitt (88) des Schleuderrings (83) in Kontakt mit der ringförmigen Oberfläche (33) der ersten angrenzenden Schulter (32) angeordnet ist, und dadurch, dass der Flanschabschnitt (88) eine radiale Länge von nicht mehr als dem Eineinhalbfachen der radialen Höhe der ersten angrenzenden Schulter (32) aufweist, und dadurch, dass die erste angrenzende Schulter (32) axial wie folgt begrenzt ist:
auf der Seite, an der sich die Keilfläche (31) befindet, durch die ringförmige Oberfläche (33) und
auf der Seite, an der sich der Flansch (4) befindet, durch eine ringförmige Oberfläche (35) mit einem gekrümmten Querschnitt, wobei die ringförmige Oberfläche (35) und die gekrümmte ringförmige Oberfläche (33) einen abgeschrägten Rand (37) dazwischen bilden.

2. Radnabeneinheit nach Anspruch 1, **dadurch gekennzeichnet, dass** der Flanschabschnitt (88) über den abgeschrägte Rand (37) vorsteht und in einem Wirbelschutzelement (90) endet, das ein Labyrinth (91) mit mindestens einem Außenring (2) bildet.

3. Radnabeneinheit nach Anspruch 1 oder 2, **dadurch gekennzeichnet, dass** die ringförmige Querfläche (33) der Schulter (32) einen Grad der Oberflächenverarbeitung besitzt, die einem Grad der Oberflächenverarbeitung der Keilfläche (31) entspricht.

## Revendications

1. Unité de moyeu de roue (1) pour des roues de véhicule, l'unité (1) ayant un axe de rotation (A) et comprenant :
- un anneau interne à flasque (3) avec un flasque (4) pour supporter une roue,
- un anneau externe (2) comprenant un bord cylindrique (21) en regard du flasque (4) et fournissant une surface cylindrique (23) coaxiale à l'axe (A),
- des corps de roulement (5) disposés entre l'anneau interne (3) et l'anneau externe (2),
- un dispositif d'étanchéité (8) positionné du côté roue et comprenant, l'un après l'autre, une ou plusieurs lèvres d'étanchéité (82) et un déflecteur (83) qui est monté sur une surface de clavetage (31) de l'anneau interne (3) et qui est positionné en contact avec les lèvres d'étanchéité (82), le déflecteur (83) comprenant une portion cylindrique respective (87) qui est clavetée sur la surface de clavetage (31) et une portion à flasque (88) qui est fixée à la portion cylindrique (87) et qui est transversale par rapport à celle-ci ;
- un premier épaulement d'aboutement axial (32) qui est formé le long de la surface de clavetage (31) sur laquelle le déflecteur (83) est claveté et qui est positionné en contact avec le déflecteur, le dispositif d'étanchéité (8) étant positionné à l'intérieur d'un siège (6) qui est délimité
- radialement vers l'extérieur par la surface cylindrique (23) du bord cylindrique (21),
- radialement vers l'intérieur par la surface de clavetage (31),
- axialement vers l'extérieur par une surface annulaire (33) qui est transversale à l'axe (A) et qui est formée par l'épaulement (32), le siège (6) étant ouvert vers les corps de contact de roulement (5),
la surface cylindrique (23) du bord cylindrique (21) s'étendant axialement au-delà de la surface de clavetage (31) vers le flasque (4) ; **caractérisée en ce que** la portion à flasque (88) du déflecteur (83) est positionnée en contact avec la surface annulaire (33) du premier épaulement d'aboutement (32), **en ce que** la portion à flasque (88) présente une longueur radiale ne dépassant pas une fois et demi la hauteur radiale du premier épaulement d'aboutement (32), et **en ce que** le premier épaulement d'aboutement (32) est délimité axialement :
du côté sur lequel est située la surface de clavetage (31), par la surface annulaire (33) et
du côté sur lequel est situé le flasque (4), par une surface annulaire (35) ayant une section transversale courbe, la surface annulaire (33) et la surface annulaire courbe (35) formant entre elles un bord angulaire (37).

2. Unité de moyeu de roue selon la revendication 1, **caractérisée en ce que** la portion à flasque (88) fait saillie au-delà du bord angulaire (37) et se termine dans un élément anti-vortex (90) formant un labyrinthe (91) avec au moins l'anneau externe (2).

3. Unité de moyeu de roue selon la revendication 1 ou 2, **caractérisée en ce que** la surface annulaire transversale (33) de l'épaulement (32) présente un degré de finition de surface similaire à un degré de finition de surface de la surface de clavetage (31).
